## Europäisches Patentamt
## European Patent Office
## Office européen des brevets

(19)

(11) Veröffentlichungsnummer: **0 012 223**
**B1**

(12) **EUROPÄISCHE PATENTSCHRIFT**

(51) Int. Cl.³: **G 07 C 5/12,** G 01 D 15/26, G 01 D 15/32, G 01 P 1/08

(45) Veröffentlichungstag der Patentschrift:
**27.10.82**

(21) Anmeldenummer: **79104415.9**

(22) Anmeldetag: **09.11.79**

(30) Priorität: **14.12.78 DE 2853891**

(43) Veröffentlichungstag der Anmeldung:
**25.06.80 Patentblatt 80/13**

(45) Bekanntmachung des Hinweises auf die Patenterteilung:
**27.10.82 Patentblatt 82/43**

(84) Benannte Vertragsstaaten:
**DE FR GB IT**

(56) Entgegenhaltungen:
**DE-A-2 433 745**
**FR-A-2 109 378**
**FR-A-2 340 585**
**FR-A-2 348 535**
**US-A-3 877 037**

(54) **Fahrtschreiber.**

(73) Patentinhaber: **Kienzle Apparate GmbH,
Heinrich-Hertz-Strasse Postfach 1650,
D-7730 Villingen-Schwenningen (DE)**

(72) Erfinder: **Vögtlin, Karl, Mannheimerstrasse 9,
D-7730 VS-Villingen (DE)**
Erfinder: **Schultze, Hartmut, Görlitzerstrasse 93,
D-7730 VS-Villingen (DE)**
Erfinder: **Zimmermann, Hans, Brückenstrasse 22,
D-7220 VS-Schwenningen (DE)**
Erfinder: **Maier, Wolfgang, Kopsbühl 8,
D-7730 VS-Villingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Fahrtschreiber

Die Erfindung betrifft einen Fahrtschreiber mit einem Gehäuse und einem mit diesem gelenkig verbundenen Deckel, mit von einem Laufwerk zeitrichtig antreibbaren Zentrier- und Mitnahmeelementen für in zwei parallelen Ebenen angeordneten Diagrammscheiben, mit einem den Diagrammscheiben als Registrierunterlage dienenden Träger, in welchem das Laufwerk angeordnet ist und die Zentrier- und Mitnahmeelemente gelagert sind, und mit Mitteln, welche ein wechselweises in Wirkverbindung bringen der Diagrammscheiben mit sowohl gehäuse- als auch deckelseitig angeordneten Registrierorganen gestatten.

Derartige mit Registriermitteln für das gleichzeitige Registrieren auf mehreren, im wesentlichen gleichgestalteten Diagrammscheiben ausgerüstete Fahrtschreiber dienen im allgemeinen dem Registrieren von fahrzeuggebundenen Daten und dem Erfassen von Arbeitszeiten einer in einem Fahrzeug tätigen, wenigstens aus zwei Personen bestehenden Fahrzeugbesatzung, wobei jedem Mitglied der Fahrzeugbesatzung — im folgenden abkürzend Fahrer genannt — eine Diagrammscheibe zugeordnet ist.

Hinsichtlich der Anordnung der Diagrammscheiben und deren Antriebsmittel sowie auch der Registrierorgane sind bereits verschiedene konstruktive Lösungen bekannt. Diese Lösungen zwingen jedoch, vom konstruktiven Aufwand und unterschiedlichen technischen Mängeln abgesehen, zu einer mehr oder weniger unbefriedigenden Handhabung der Diagrammscheiben, wobei sich diese nicht allein auf das Auswechseln, d. h. das Einlegen und Entnehmen der Diagrammscheiben beschränkt, sondern auch beim Kontrollieren der Registrierungen in solchen Fällen erforderlich ist, bei denen keine mittelbare Kontrollierbarkeit, beispielsweise durch optische oder elektrische Mittel, gegeben ist.

Bei dem allgemein üblichen Gerätekonzept eines für den genannten Zweck bestimmten Fahrtschreibers, dessen Registrierorgane für die Fahrzeugdaten, beispielsweise für die zurückgelegten Strecken und die gefahrenen Geschwindigkeiten sowie wenigstens ein dem einen Fahrer zugeordneten Arbeitszeitregistrierorgan bekanntlich in einer ersten Ebene wirksam sind, während wenigstens ein weiteres, dem anderen Fahrer zugeordnetes Arbeitszeitregistrierorgan in einer zweiten Ebene registriert, sind die Diagrammscheiben vor allem jedoch dann zu handhaben, wenn sich bei einem Schichtwechsel die Fahrer im Lenken des Fahrzeuges ablösen. Das heißt, es wird, um in einem solchen Falle eine ordnungsgemäße Zuordnung der aufzunehmenden Daten zu erhalten, ein Platzwechsel der Diagrammscheiben innerhalb des Fahrtschreibers erforderlich.

Einen derartigen Fahrtschreiber zeigt beispielsweise die Schrift FR-A-2 109 378, wobei das bauliche Konzept dieses Fahrtschreibers einen mit dem Gehäuse gelenkig verbundenen Träger vorsieht, mit dem wiederum der Deckel des Fahrtschreibers gelenkig verbunden ist. In dem somit zwischen Deckel und Gehäuse eingefügten Träger sind unter anderem die Zentrier- und Mitnahmeelemente sowie geeignete Registrierunterlagen für die einerseits gehäuseseitig, andererseits deckelseitig dem Träger zugeordneten Diagrammscheiben und ein die Zentrier- und Mitnahmeelemente antreibendes Laufwerk angeordnet. Zwar bietet ein derartiges Konzept die Möglichkeit, die Aufzeichnungen auf den Diagrammscheiben auf relativ einfache Weise kontrollieren zu können, dem steht aber der Nachteil gegenüber, daß das sozusagen dreiteilige Gerät zwei Scharniere und zwei Trennfugen bzw. Schließebenen aufweist und daß letztlich der Platzwechsel der Diagrammscheiben in der herkömmlichen Weise durch unmittelbares Handhaben der Diagrammscheiben erfolgen muß.

Eine durch die Offenlegungsschrift DE-A-2 604 127 bekanntgewordene und der vorliegenden Erfindung am nächsten liegende Anordnung vermeidet hinsichtlich des genannten Platzwechsels ein unmittelbares Handhaben der Diagrammscheiben, weist andererseits aber verschiedene, im folgenden noch zu erläuternde Nachteile auf.

Der Gegenstand dieser Offenlegungsschrift DE-A-2 604 127 sieht ein mit einem entsprechend gestalteten Fahrtschreiber, bei dem wenigstens ein Arbeitszeitregistrierorgan im Deckel angeordnet ist, während die übrigen Registrierorgane in bekannter Weise aus einer das Innere des Fahrtschreibergehäuses schützenden Abdeckung herausragen, verbindbares Tragteil vor, in dem zwei den Diagrammscheiben zugeordnete Registrierauflagen derart angeordnet und getrieblich miteinander verbunden sind, daß ein gegenläufiger Antrieb der beiden Registrierauflagen erfolgt, wenn eine davon von einem geeigneten Laufwerk angetrieben wird. Gemäß der üblichen Bauweise befindet sich dieses Laufwerk im Deckel des betreffenden Fahrtschreibers. Ein geeignetes Zentrier- und Mitnahmeelement, welches mit einer Welle des Laufwerkes verdrehfest verbunden ist, dient als Aufnahmeelement für die eine von Hand mit dem Aufnahmeelement verbindbare und somit vom Laufwerk unmittelbar antreibbare Registrierauflage. Dem Tragteil, das einerseits der Lagerung der getrieblichen Verbindung der beiden Registrierauflagen dient, andererseits aber auch als kassettenartiger Rahmen für das Handhaben der Registrierauflagen ausgebildet sein kann, sind weitere Aufnahmemittel zugeordnet, die eine von Hand lösbare, ortsfeste Verbindung mit dem Gehäuse des Deckels gestatten. Dementsprechend bleiben beim Öffnen und Schließen dieses Fahrtschreibers die Registrierauflagen und das Tragteil mit dem Deckel verbunden und werden mit diesem verschwenkt.

Wenn nun bei einem Schichtwechsel der Fahrer ein Platzwechsel der Diagrammscheiben erfolgen soll, so wird die beschriebene Baugruppe aus Registrierauflagen und Tragteil von ihren Aufnahmemitteln am Deckel abgenommen, gewendet und wieder aufgesetzt, ohne, was in diesem Falle gegenüber anderen bekannten Einrichtungen als der entscheidende Vorteil anzusehen ist, die Diagrammscheiben unmittelbar handhaben zu müssen.

Das Entnehmen dieser Baugruppe aus dem Fahrtschreiber beinhaltet aber auch die bereits erwähnten Nachteile, insbesondere den Nachteil, daß die Antriebsverbindung zwischen Laufwerk und Diagrammscheiben getrennt wird. Diese Trennung führt zu einem mehr oder weniger großen Zeitversatz der Aufzeichnungen durch die zwischen den Registrierauflagen entstehenden Zahn- und Lagerspiele sowie durch Toleranzen, die an den Aufnahmemitteln des Deckels und des Tragteiles gegeben sind. Ein weiterer Nachteil ist darin zu sehen, daß die genannte Baugruppe vom Fahrtschreiber trennbar ist, somit ein loses Teil darstellt und der Fahrtschreiber, sei es aus Gedankenlosigkeit oder in betrügerischer Absicht, geschlossen werden kann, ohne daß diese Baugruppe zuvor wieder eingesetzt wird. Auch die Handhabung der Baugruppe ist umständlich, weil beim Aufsetzen auf den Deckel einerseits auf ein zeitrichtiges Verbinden mit den Zentrier- und Mitnahmemitteln geachtet werden muß, andererseits die richtige Stellung des Tragteils in bezug auf das Deckelgehäuse zu suchen ist.

Ziel der vorliegenden Erfindung war es daher, die aufgeführten Nachteile der beschriebenen, bekannten Anordnung zu vermeiden, insbesondere jedoch die Möglichkeit für eine problemlose, aber auch fehlerfreie und betrugssichere Handhabung der Diagrammscheiben zu schaffen, sowie die Genauigkeit der Registrierungen durch geeignete technische Maßnahmen zu verbessern.

Die Lösung dieser Aufgabe sieht vor, daß der Träger auf einer ersten zwischen den Diagrammscheibenebenen befindlichen und bezüglich der Diagrammscheiben diametral angeordneten Achse drehbar gelagert ist und daß der ersten Achse eine zweite, im wesentlichen rechtwinklig zur ersten gerichtete Achse zugeordnet ist, um die der Träger in Schwenkrichtung des Deckels bewegbar ist.

Ein Ausführungsvorschlag der Erfindung ist dadurch gekennzeichnet, daß die Achse des Trägers schwenkbar auf der Scharnierachse des Deckels gelagert ist.

Außerdem sieht eine zweckmäßige Ausführungsvariante vor, daß den Diagrammscheiben zugeordnete, lose im Gehäuse und im Deckel gehalterte Spannelemente als rastende Verbindungsmittel einerseits zwischen dem Träger und dem Deckel, andererseits zwischen dem Träger und dem Gehäuse wirksam sind und daß dem Riegel eines der Verriegelung von Deckel und Gehäuse dienenden und im Deckel angeordneten Schlosses im Träger ein Schlitz zugeordnet ist.

Diese Ausführungsvariante stellt durch die Möglichkeit, den Deckel mit oder ohne gleichzeitigem Verschwenken des Trägers öffnen zu können, nicht allein eine einfache Kontrollierbarkeit in bezug auf die ordnungsgemäße Funktion der Registrierorgane dar, sondern sie bietet den Vorteil, die Diagrammscheiben auswechseln zu können, ohne den Träger wenden zu müssen. Dabei erlaubt die Anwendung einer durch die Patentschrift DE-C-2 433 745 bekanntgewordenen Diagrammscheiben-Spanneinrichtung sowohl ein Festhalten der Diagrammscheiben auf ihren entsprechend ausgebildeten Zentrier- und Mitnahmeelementen, als auch eine Rastfunktion in bezug auf den Träger, indem die in der genannten Patentschrift DE-C-2 433 745 dargestellten Spannelemente ortsfest in sowohl im Deckel als auch im Gehäuse des Fahrtschreibers befindlichen Bauelementen gehaltert sind.

Außer der Tatsache, daß die erfindungsgemäße Lösung die aufgeführten Nachteile des Standes der Technik vermeidet, insbesondere daß beim Platzwechsel der Diagrammscheiben keine Antriebsunterbrechung zwischen dem Laufwerk und den Zentrier- und Mitnahmeelementen der Diagrammscheiben erfolgt, bietet der Erfindungsgegenstand in einer Ausbildung gemäß Anspruch 1 den zusätzlichen Vorteil, daß der Träger und damit jeweils die Diagrammscheibe, auf der die fahrzeuggebundenen Daten registriert werden sollen, in bezug auf das im Gehäuse des Fahrtschreibers befindliche Lagerteil für die betreffenden Registrierorgane durch ein geeignetes, beispielsweise an dem Lagerteil ausgebildetes Aufnahmeelement zentrierbar ist. Auf diese Weise werden die relativ groben Lagetoleranzen zwischen einer am Deckel angeordneten Diagrammscheibe und den im Gehäuse des Fahrtschreibers befindlichen Registrierorganen ausgeschaltet und eine insbesondere hinsichtlich der Lage der Geschwindigkeitsaufzeichnungen auf der Diagrammscheibe notwendige Genauigkeitsverbesserung erzielt.

Weitere Vorteile der Erfindung und mögliche vorteilhafte Ausgestaltungen des Erfindungsgedankens zeigt ein im folgenden, anhand der beigefügten Zeichnungen beschriebenes Ausführungsbeispiel. Der Einfachheit halber ist bei diesem Ausführungsbeispiel ein reines Registriergerät dargestellt worden, es läßt sich jedoch mit entsprechendem Mehraufwand auch das allgemein übliche bauliche Konzept eines Fahrtschreibers verwirklichen, indem geeignete, im Träger angeordnete Kupplungsmittel für eine mechanische Übertragung der Geschwindigkeitsanzeige sowie an sich bekannte Übertragungsmittel für ein Streckenzählwerk angewandt werden. Es ist auch ohne weiteres denkbar und bei einer elektrischen Meßwertverarbeitung an sich selbstverständlich, sowohl für die Zeit- und die Geschwindigkeitsanzeige als auch für die Anzeige der zurückgelegten Strecken elektrische Übertragungsmittel und auch dementsprechende Anzeigeeinrichtungen vorzusehen.

Von den Zeichnungen, die im folgenden näher erläutert werden, sollen zeigen

Fig. 1 eine weitgehend schematisierte Bildserie a—m zur Darstellung der bei dem erfindungsgemäßen Fahrtschreiber gegebenen Handhabungsmöglichkeiten, beim Einlegen und Entnehmen der Diagrammscheiben sowie bei deren Platzwechsel;

Fig. 2 eine beispielsweise Frontansicht eines lediglich registrierenden Fahrtschreibers gemäß der Erfindung;

Fig. 3 eine Schnittdarstellung eines Ausführungsbeispieles des erfindungsgemäßen Fahrtschreibers;

Fig. 4 eine Teilansicht aus der Fig. 3.

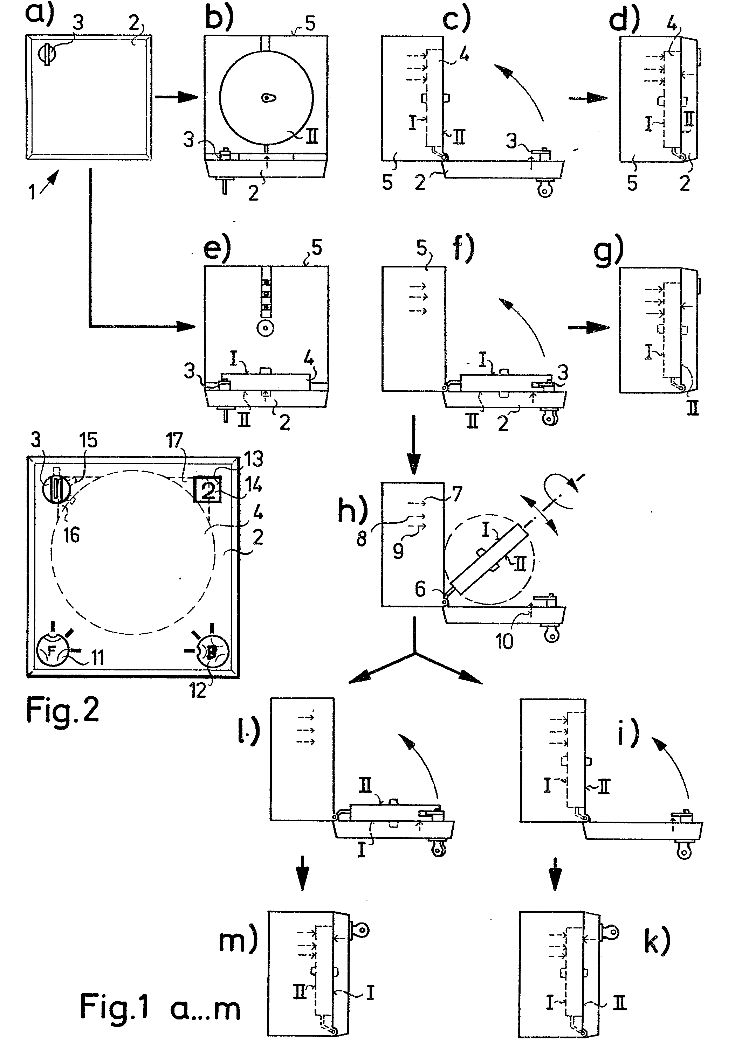

In Fig. 1 soll das Bild a einen geschlossenen Fahrtschreiber 1 darstellen, dessen Deckel 2 durch Betätigen eines Schlosses 3 entriegelt und derart geöffnet werden kann, daß ein vom Deckel 2 unabhängig bewegbarer Träger 4 für das Laufwerk und die Diagrammscheibenauflagen im Gehäuse 5 des Fahrtschreibers 1 verrastet bleibt, was später noch im einzelnen näher beschrieben wird. Auf diese Weise wird eine der beiden Diagrammscheiben, im allgemeinen ist dies die dem als Beifahrer tätigen Fahrer II zugeordnete Diagrammscheibe II, für eine Kontrolle oder einen Wechsel zugänglich.

Diesen Zustand des Fahrtschreibers 1 mit aufgeklapptem Deckel 2 zeigen Bild b und dessen Seitenansicht Bild c, während Bild d eine Seitenansicht von dem wieder geschlossenen Fahrtschreiber 1 darstellt.

Das Schloß 3 läßt sich aber auch, wie Bild e zeigt, derart betätigen, daß der Deckel 2 aufgeklappt werden kann, daß aber der Träger 4 mit dem Deckel 2 verriegelt bleibt und zusammen mit dem Deckel 2 verschwenkt wird. Dadurch wird die zweite, dem Fahrer I zugeordnete Diagrammscheibe I zum Wechseln oder auch lediglich zur Kontrolle zugänglich. Bild f zeigt wiederum eine Seitenansicht von Bild e.

Aus diesem Zustand heraus kann, wie Bild g zeigt, der Fahrtschreiber 1 wieder geschlossen werden, oder es wird die Verriegelung zwischen dem Träger 4 und dem Deckel 2 aufgehoben, so daß der Träger 4 unabhängig vom Deckel 2 verschwenkbar ist und beispielsweise, wie Bild i zeigt, in das Gehäuse 5 zurückgeschwenkt werden kann. Dies ermöglicht auf einfache Weise eine Kontrolle beider Diagrammscheiben I und II bzw. deren Auswechslung.

Die erfindungsgemäße Anordnung des Trägers 4, nämlich drehbar auf einer verschwenkbaren Achse 6, ermöglicht jedoch nicht nur ein Verschwenken des Trägers 4, sondern auch, wie dies in Bild h angedeutet ist, ein Wenden um die Achse 6 und somit einen Platzwechsel der Diagrammscheiben I und II in bezug auf die im Gehäuse 5 einerseits und im Deckel 2 andererseits befindlichen, beispielsweise dem Registrieren der Geschwindigkeiten, der zurückgelegten Strecken sowie der Arbeitszeiten des Fahrers I dienenden Registrierorgane 7, 8 und 9 bzw. dem für das Registrieren der Arbeitszeiten des Fahrers II vorgesehenen Registrierorgan 10.

Nach dem Wenden des Trägers 4, mit dem selbstverständlich auch ein Auswechseln einer oder beider Diagrammscheiben I und II verbunden sein kann, läßt sich der Träger 4 in der bereits beschriebenen Weise (Bild i) in das Gehäuse 5 zurückschwenken und danach der Deckel 2 schließen (Bild k). Es ist aber auch möglich, den Träger 4 gemäß Bild 1 wieder auf dem Deckel 2 aufzusetzen, mit dem Deckel 2 zu verriegeln bzw. in geeigneter Weise zu verrasten und Deckel und Träger gemeinsam in die geschlossene Stellung (Bild m) zurückzuführen.

Die Fig. 2 zeigt eine gegenüber der Fig. 1a vervollständigte Frontansicht eines Fahrtschreibers der erfindungsgemäßen Art mit den Fahrern zugeordneten Einstellmitteln 11 und 12, die in an sich bekannter Weise der Einstellung kennzeichnender Registrierungen für unterschiedliche Arbeitsarten dienen. Ferner ist ein Fenster 13 vorgesehen, an welchem durch geeignete Mittel 14, beispielsweise derjenige Fahrer angezeigt sein kann, der das Fahrzeug steuert und auf dessen Diagrammscheibe zusätzlich zu den persönlichen Arbeitszeitdaten die Fahrzeugdaten aufgezeichnet werden. Die Fig. 2 zeigt außerdem die bereits beschriebenen, bevorzugten Stellungen des Schlosses 3 bzw. des Riegels 15, nämlich eine Stellung in der der Deckel 2 des Fahrtschreibers mit dessen Gehäuse verschlossen ist, eine weitere in der der Deckel 2 geöffnet werden kann und der Träger 4 im Gehäuse 5 verbleibt und eine andere, bei der der Träger 4 mit dem Deckel 2 verriegelt bleibt und mit diesem verschwenkbar ist. Zwei am Träger 4 ausgebildete Ansätze 16 und 17 dienen als Wendehilfe beim Verschwenken des Trägers 4 um die Achse 6.

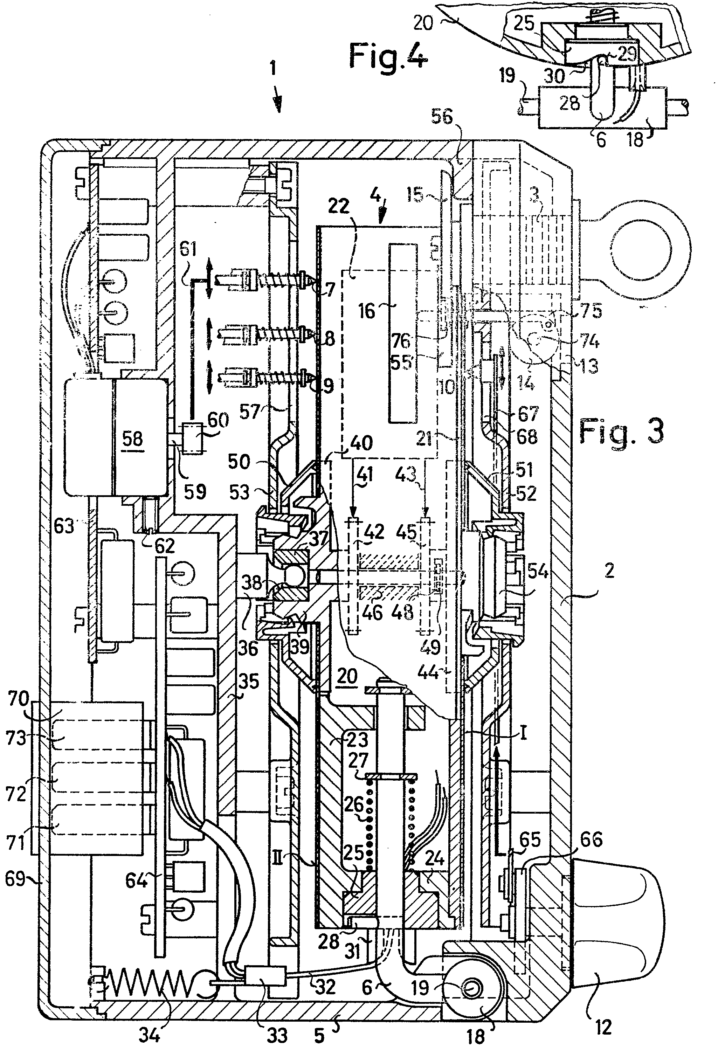

Wie die Fig. 3 und 4 zeigen, ist die Achse 6 mittels einer Buchse 18, die an ihr angeformt ist, auf einer Achse 19, die vorzugsweise die Scharnierachse zwischen dem Deckel 2 und dem Gehäuse 5 bildet, schwenkbar gelagert. Der Träger 4, der seinerseits auf der Achse 6 drehbar gelagert ist, besteht aus einem topfförmigem Gehäuse 20 und einem dieses abschließenden Deckel 21, deren nach außen weisende Stirnflächen Registrierauflage und Führungsfläche für die beiden Diagrammscheiben I und II bilden. Das Gehäuse 20 des Trägers 4 dient ferner der Aufnahme eines Laufwerkes und der erforderlichen getrieblichen Mittel für den zeitrichtigen Antrieb der Diagrammscheiben. Dabei kann ein vollständiges elektrisches Uhrwerk Anwendung finden oder lediglich ein mit »22« bezeichnetes Laufwerk vorgesehen sein, dessen Steuermittel an einer anderen Stelle des Fahrtschreibers angeordnet sein mögen, beispielsweise auf einer Schaltungsplatte gemeinsam mit anderen Funktionen des Fahrtschreibers dienenden elektronischen Bauelementen. Denkbar ist aber auch, daß »22« ein rein mechanisches Uhrwerk darstellt.

Zur Lagerung des Trägers 4 auf der Achse 6 ist an dem Gehäuse 20 eine Lagerbrücke 23 angeformt, an deren einem Schenkel 24 eine als Lagerelement wirkende Buchse 25 eingesetzt ist. Unter der Wirkung einer Feder 26, die sich einerseits an einer auf der Achse 6 befestigten Scheibe 27 abstützt, andererseits auf das Gehäuse 20 einwirkt, sitzt der Träger 4, wenn er von seiner, im einzelnen noch näher zu beschreibenden gehäusefesten Zentrierung gelöst wird, mit der Stirnseite der Buchse 25 an einem in der Achse 6 befestigten Anschlagstift 28 auf.

Der Drehwinkel des Trägers 4 in bezug auf die Achse 6 ist insbesondere wegen der erforderlichen elektrischen Verbindungen auf 180° begrenzt. Hierzu dienen, wie aus Fig. 4 näher ersichtlich ist, zwei an der Buchse 25 stirnseitig, und zwar spiegelbildlich ausgebildete Anschlagflächen, von denen eine mit »29« bezeichnet ist. Durch eine kurvenförmige Ausbildung der Stirnfläche der Buchse 25 zwischen den beiden durch die Anschlagflächen 29 gegebenen Grenzstellungen ist im Zusammenwirken mit der Feder 26 außerdem eine Rastwirkung beim Wenden des Trägers 4 um die Achse 6 erzielbar.

Ein ebenfalls am Gehäuse 20 befestigtes, als Klemmbuchse ausgebildetes Element 31 dient der Umlenkung und Durchführung bei gleichzeitiger Zugentlastung eines wenigstens für die elektrische Versorgung des Uhr- bzw. Laufwerkes 22 vorgesehenen Leitungsbündels 32. Dieses wird außerhalb des Trägers 4 zur Vermeidung von Schlingenbildung und Krangeln mittels einer über eine Klammer 33 an dem Leitungsbündel 32 angreifenden Zugfeder 34 unter Vorspannung gehalten.

Die Zentrierung des Trägers 4 erfolgt, wie die Fig. 3 zeigt, mittels eines an einem gehäusefesten Zwischenboden 35 befestigten Zapfens 36. Dieser greift, wenn sich der Träger 4 in seiner Registrierlage im Gehäuse 5 befindet, vorzugsweise unter Verwendung einer geeigneten Laufbuchse 37 in eine Zentrieröffnung 38 ein, die in einem Zentrier- und Mitnahmedorn 39 ausgebildet ist, der seinerseits in an sich bekannter Weise an der einen, in diesem Falle der Diagrammscheibe II zugeordneten Diagrammscheibenauflage 40 mit einem beispielsweise eiförmigen Querschnitt angeformt ist. Die Diagrammscheibenauflage 44 bzw. deren Zentrier- und Mitnahmedorn 54 ist selbstverständlich in der gleichen Weise ausgebildet. Die Zentrierung des Trägers 4 ist jedoch auch auf eine andere Weise denkbar, indem einerseits an geeigneter Stelle am Umfang des Trägers 4, andererseits beispielsweise am Gehäuse 5 miteinander in Wirkverbindung bringbare und zweckmäßigerweise justierfähige Zentrier- bzw. Führungs- sowie auch Rastmittel ausgebildet sind. Dadurch könnten für das Festhalten der Diagrammscheiben I und II auf den Diagrammscheibenauflagen 40 und 44 auch andere Spannelemente als die in Fig. 3 dargestellten Anwendung finden, und es wären bei einem derartigen Fahrtschreiberkonzept die konstruktiven Möglichkeiten einer zentralen Durchführung von Kupplungsmitteln zur Betätigung eines Geschwindigkeitszeigers verbessert. Andererseits kann auf diese Möglichkeiten insofern verzichtet werden, als, abgesehen von einer denkbaren, mittels Zugmittelgetriebe um den Träger 4 herumgeführte mechanische Verbindung, bei der vorgesehenen elektronischen Meßwertverarbeitung irgendeine elektrische Anzeigeeinrichtung zwangsläufig Anwendung finden müßte.

Hinsichtlich einer Steigerung der Lagegenauigkeit des Trägers 4 im Gehäuse 5 ist ferner ein Gedanke erwähnungswert, der vorsieht, daß die Achse 6 durch den Träger 4 hindurchgeführt wird, also eine möglichst lange Lagerung geschaffen wird und daß die durchgeführte Achse 6 selbst Teil der zwischen Träger und Gehäuse vorzusehenden Zentrier- und Rastmittel darstellt.

Der Antrieb der Diagrammscheibenauflage 40 und damit der Diagrammscheibe II erfolgt ausgehend vom Laufwerk 22 über eine lediglich mit einem Pfeil symbolisierten, getrieblichen Verbindung 41, mit der eine der Diagrammscheibenauflage 40 ausgebildete Verzahnung 42 in Wirkverbindung steht. Desgleichen wirkt eine getriebliche Verbindung 43 auf eine an der der Diagrammscheibe I zugeordneten Diagrammscheibenauflage 44 ausgebildeten Verzahnung 45 ein, jedoch derart, daß die beiden Diagrammscheibenauflagen 40 und 44 einen entgegengesetzten Drehsinn aufweisen. Es ist daher erforderlich, daß wenn, wie Fig. 3 zeigt, beide Diagrammscheibenauflagen 40 und 44 gleichachsig im Träger angeordnet werden, beispielsweise die Diagrammscheibenauflage 40 fest mit einer in geeigneter Weise gelagerten (46) Welle oder Hohlwelle 47 verbunden ist, während die andere Diagrammscheibenauflage 44 lose auf dieser Welle dreht. Die axiale Sicherung der gesamten Anordnung erfolgt durch eine in einen Schlitz 48 einführbare und mit der Welle 47 verbindbare Sicherungsscheibe 49.

Für das Festspannen der Diagrammscheiben I und II auf den Diagrammscheibenauflagen 40 und 44 sind Spannelemente 50 und 51 vorgesehen, deren Ausbildung und Funktion in der bereits genannten Patentschrift DE-C-2 433 745 näher beschrieben sind. Diese Spannelemente sind lose in sowohl im Deckel 2 als auch im Gehäuse 5 befestigten Wandelementen 52 und 53 gehaltert und rasten beim Einschwenken des Trägers 4 in das Gehäuse 5 bzw. beim Schließen des Deckels 2 auf die jeweiligen in geeigneter Weise ausgebildete Zentrier- und Mitnahmedorne 39 und 54 der Diagrammscheibenauflagen 40 und 44 auf. Dabei sollte gewährleistet sein, daß die Rastkräfte derart eingestellt sind, daß beim Öffnen des Deckels 2 zunächst die Verbindung zwischen dem Spannelement 51 und dem Zentrier- und Mitnahmedorn 54 gelöst und der Träger 4 im Gehäuse 5 festgehalten wird, es sei denn, die Handhabung soll gemäß Bild 1e erfolgen. In diesem Falle wird der in geeigneter Weise mit dem Zylinder des Schlosses 3 verbundene Riegel 15, der in der in Fig. 3 dargestellten Schließstellung hinter einen Gehäusevorsprung 56 eingreift, derart verschwenkt, daß er in einen, im Träger 4 befindlichen Schlitz 55 eingreift, so daß der Träger 4 beim Öffnen des Deckels von dem Spannelement 50 abgezogen werden kann und Träger und Deckel gemeinsam verschwenkt werden können. Die Spannelemente 50 und 51 haben somit sowohl eine Spannfunktion hinsichtlich der Diagrammscheiben I und II als auch eine Rast- und Festhaltefunktion hinsichtlich des Trägers 4.

Der Vollständigkeit halber sei erwähnt, daß auf der Diagrammscheibe II die in der üblichen Weise durch einen in dem Wandelement 53 befindlichen Schlitz 57 hindurchragenden, gefedert gelagerten Registrierorgane 7, 8 und 9 wirksam sind, wobei im allgemeinen wenigstens das die gefahrenen Geschwindigkeiten aufzeichnende Registrierorgan 7 auf einem in einem geeigneten, nicht dargestellten Gestell gelagerten und radial zur Diagrammscheibe II bewegbaren Schlitten angeordnet ist. Dieser Schlitten steht, durch die Linie 61 symbolisiert, getrieblich in Eingriff mit einem Stellmotor 58 bzw. mit einem auf dessen Motorwelle 59 befestigten Ritzel 60. Der Stellmotor 58, der seinerseits im Zwischenboden 35 gehaltert und in geeigneter Weise (Madenschraube 62) befestigt ist, liegt elektrisch am Ausgang einer elektronischen, vorzugsweise als Nachlaufsystem ausgelegten Meßschaltung, die von einem Geber gelieferte, fahrtabhängige Impulse in geschwindigkeitsproportionalen Potentialwerte umsetzt. Da die elektronische Meßwertverarbeitung nicht Gegenstand der Erfindung ist, kann auf ihre Darstellung im einzelnen der Einfachheit halber verzichtet werden. In Fig. 3 sind daher lediglich am Zwischenboden 35 befestigte und mit für die Meßwertwertverarbeitung erforderlichen, jedoch nicht näher bezeichneten Bauelementen bestückte Leiterplatten 63 und 64 dargestellt.

Der Übersichtlichkeit wegen ist auch auf eine Darstellung der das Registrierorgan 8 antreibenden Mittel — falls das Registrierorgan 8 in der im Fahrtschreiber üblichen Weise die zurückgelegte Strecke aufzeichnet, würde es vorteilhafterweise ebenfalls motorisch, beispielsweise mittels eines Schrittmotors betätigt werden und in ähnlicher Weise wie das die Geschwindigkeiten aufzeichnende Registrierorgan 7 gelagert sein — verzichtet worden. Auch bedarf die getriebliche Verbindung zwischen dem Registrierorgan 9, das der Aufzeichnung der Arbeitszeiten für denjenigen Fahrer dient, der das Fahrzeug steuert und das mittels des Einstellknopfes 11, der zweckmäßigerweise die Symbolbezeichnung F trägt, in die zutreffende Registrierlage bringbar ist, an sich keiner näheren zeichnerischen Darstellung. Ebenso kann auf eine ins einzelne gehende zeichnerische Darstellung der getrieblichen Verbindung zwischen dem Einstellknopf 12 und einem im Deckel 2 befindlichen Registrierorgan 10, mit dem die Arbeitszeiten des jeweiligen Beifahrers registrierbar sind, verzichtet werden. In Fig. 3 ist jedoch angedeutet, daß ein erster Hebel 65 an einer mit dem Einstellknopf 12 verdrehfest verbundenen Scheibe 66 exzentrisch gelagert und das von einem Hebel 67 getragene Registrierorgan 10, das durch eine geeignete Aussparung 68 in dem Wandelement 52 des Deckels 2 hindurchgreift und auf der Diagrammscheibe I federnd aufliegt, durch weitere, nicht dargestellte getriebliche Mittel betätigbar ist.

Hierzu wird noch vermerkt, daß eine Anordnung der Registrierorgane 7, 8, 9 bzw. 10 im unteren Teil des Fahrtschreibers 1, somit also näher an den Einstellknöpfen 11 und 12, die getriebliche Verbindung, insbesondere zu den Registrierorganen 9 und 10, wesentlich vereinfachen würde. Im übrigen sind in dieser getrieblichen Verbindung, wenn der Einstellknopf 11 nicht ortsfest in einem Vorbau des Gehäuses 5, dessen Kontur im Deckel 2 ausgespart wäre, gelagert ist, sondern im Deckel 2 angeordnet ist, geeignete Kupplungsmittel bzw. Gelenkverbindungen vorzusehen.

Der vorstehend beschriebene Fahrtschreiber 1 ist rückseitig durch eine Kappe 69 abgeschlossen. An dieser Kappe 69 ist eine Steckeraufnahme 70 ausgebildet, in die mehrere, an der Leiterplatte 64 befestigte Kontaktzungen, von denen drei — 71, 72 und 73 — sichtbar sind, hineinragen. Die Kontaktzungen dienen der Meßwertübernahme und der elektrischen Versorgung des Fahrtschreibers.

Die Betätigung des Anzeigeelements 14, für das beispielsweise, wie Fig. 3 zeigt, eine mittels Zapfen 74 in geeigneter Weise im Deckel 2 gelagerte Trommel vorgesehen werden kann, ist in einfacher Weise dadurch realisierbar, daß ein an der Trommel angelenkter und in dem Wandelement 52 geführter Taststift 75 unter der Wirkung einer Feder 76 auf den Ansätzen 16 bzw. 17 aufliegt, je nach dem in welcher Stellung sich der Träger 4 befindet. Die Ansätze 16 und 17 sind zu diesem Zwecke derart angeordnet, daß sie in einer Ebene seitlich versetzt zur Mittenebene des Trägers 4 liegen. Zweckmäßigerweise wird diese Anzeige, die selbstverständlich auch mit elektrisch betätigbaren Mitteln erfolgen kann, derart festgelegt, daß diejenige Diagrammscheibe angezeigt wird, auf der die Fahrzeugdaten registriert werden. In dem in Fig. 2 bzw. 3 dargestellten Falle ist dies die Diagrammscheibe II, d. h. die dem Fahrer II zugeordnete Diagrammscheibe, was bedeutet, daß zu Beginn einer Fahrt eine Einigung der Fahrer dahingehend erfolgen muß, wer nun Fahrer I und wer Fahrer II sein soll. Diese Festlegung ist jedoch insofern problemlos, als davon ausgegangen werden kann, daß derjenige Fahrer, der das Fahrzeug zuerst steuert, mit Fahrer I angesprochen werden dürfte.

An dieser Stelle sei ferner noch darauf hingewiesen, daß die Einstellknöpfe 11 und 12, die mit den Symbolen F (Fahrer) und B (Beifahrer) versehen sind, gleiche Rastpositionen für die jeweiligen Arbeitszeiten, nämlich die aktiven und passiven Präsenzzeiten sowie die Pausen aufweisen, und daß die Organisation des Fahrtschreibers derart getroffen ist, daß für jeweils den das Fahrzeug steuernden Fahrer unabhängig von der Stellung des Einstellknopfes 11 eine, die Lenkzeiten kennzeichnende Registrierung vorgenommen wird, anders ausgedrückt: daß beim Anfahren des Fahrzeuges eine selbsttätige Änderung der durch den Einstellknopf 11 vorgegebenen Registrierposition des Registrierorgans 9 auf der Diagrammscheibe und/oder eine Änderung der Registriercharakteristik erfolgt.

Abschließend sei noch festgehalten, daß sich die Anwendung der vorliegenden Erfindung nicht allein auf das bauliche Konzept eines Fahrtschreibers gemäß dem beschriebenen Ausführungsbeispiel beschränkt, sondern daß vorzugsweise auch Fahrtschreiber mit einer Schub- oder Schwenklade, beispielsweise einer solchen gemäß der Patentschrift DE-C-1 548 685, mit der erfindungsgemäßen Anordnung ausrüstbar sind. Auch ist es nicht zwingend erforderlich, den beschriebenen Träger 4 gleichachsig mit dem Deckel 2 anzuordnen oder in Schwenkrichtung eines Deckels zu verschwenken. Vielmehr ist für den Träger 4 auch eine von der Bewegungsrichtung des Deckels 2 abweichende Schwenkrichtung denkbar oder der Träger 4 ist derart ausgebildet und angeordnet, daß er zusätzlich die Funktion eines Deckels oder einer geeigneten frontseitigen Abdeckung erfüllt.

### Patentansprüche

1. Fahrtschreiber mit einem Gehäuse (5) und einem mit diesem gelenkig verbundenen Deckel (2), mit von einem Laufwerk (22) zeitrichtig antreibbaren Zentrier- und Mitnahmeelementen (31, 40, 50 bzw. 44, 54, 51) für in zwei parallelen Ebenen angeordnete Diagrammscheiben, mit einem den Diagrammscheiben als Registrierunterlage dienenden Träger (4), in welchem das Laufwerk (22) angeordnet ist und die Zentrier- und Mitnahmeelemente gelagert sind und mit Mitteln, welche ein wechselweises in Wirkverbindung bringen der Diagrammscheiben mit sowohl gehäuse- als auch deckelseitig angeordneten Registrierorganen (7, 8, 9, 10) gestatten, dadurch gekennzeichnet, daß der Träger (4) auf einer ersten zwischen den Diagrammscheibenebenen befindlichen und bezüglich der Diagrammscheiben diametral angeordneten Achse (6) drehbar gelagert ist und daß der ersten Achse (6) eine zweite, im wesentlichen rechtwinklig zur ersten gerichtete Achse zugeordnet ist, um die der Träger (4) in Schwenkrichtung des Deckels (2) bewegbar ist.

2. Fahrtschreiber nach Anspruch 1, dadurch gekennzeichnet, daß die Achse (6) des Trägers (4) schwenkbar auf der Scharnierachse (19) des Deckels (2) gelagert ist.

3. Fahrtschreiber nach den Ansprüchen 1 und 2, dadurch gekennzeichnet, daß der Träger (4) auf der Achse (6) axial federnd gelagert ist und daß in Drehrichtung um die Achse (6) wirkende Rastmittel (29, 30) vorgesehen sind.

4. Fahrtschreiber nach den Ansprüchen 1 bis 3, dadurch gekennzeichnet, daß den Diagrammscheiben (I, II) zugeordnete, lose im Gehäuse (5) und im Deckel (2) gehalterte Spannelemente (50, 51) als rastende Verbindungsmittel einerseits zwischen dem Träger (4) und dem Deckel (2), andererseits zwischen dem Träger (4) und dem Gehäuse (5) wirksam sind.

5. Fahrtschreiber nach den Ansprüchen 1 bis 4, dadurch gekennzeichnet, daß dem Riegel (15) eines der Verriegelung von Deckel (2) und Gehäuse (5) dienenden und im Deckel (2) angeordneten Schlosses (3) im Träger (4) ein Schlitz (55) zugeordnet ist.

### Claims

1. Tachograph having a housing (5) and a lid (2) pivotally connected thereto, driving means (22) for time dependently driving centering and driving elements (39, 40, 50 resp. 44, 54, 51) for diagram disks arranged in two parallel planes, a carrier (4) serving as a recording support for the diagram disks, in which the driving means (22) is arranged and at which the centering and driving elements are mounted, and having means which allow for the diagram disks to be alternatively brought into cooperation with recording means (7, 8, 9, 10) arranged in the housing as well as in the lid, characterized in that the carrier (4) is rotatively mounted on an axle (6) which is arranged diametrically to and in between the planes of the diagram disks and that a second axle is attributed to the first axle (6) which is essentially at right angles to the first axle around which the carrier (4) is movable in the pivoting direction of the lid (2).

2. Tachograph according to claim 1, characterized in that the axle (6) of the carrier (4) is pivotally mounted on the pivoting axes (19) of the lid (2).

3. Tachograph according to claims 1 and 2, characterized in that the carrier (4) is axially elastically mounted on the axle (6) and that arresting means (29, 30) are provided which are operative in the direction of rotation of the axle (6).

4. Tachograph according to claims 1 to 3, characterized in that loose fastening elements (50, 51) are attributed to the diagram disks (I, II) in the housing (5) and in the lid (2) which serves as arresting connecting means on the one hand between the carrier (4) and the lid (2), on the other hand between the housing (5) and the carrier (4).

5. Tachograph according to claims 1 to 4, characterized in that the locking bar (15) of the lock (3) serving to lock the lid (2) with respect to the housing (5) and arranged in the lid (2) corresponds to a slot (55) in the carrier (4).

## Revendications

1. Enregistreur de route comportant un boîtier (5) et un capot (2) articulé sur ce dernier, avec des moyens de centrage et d'entraînement (31, 40, 50 ou 44, 54, 51), pouvant être entraînés par un mécanisme en fonction du temps réel, pour des disques de diagramme disposés en deux plans parallèles, avec un support (4) servant de table porte-graphique aux disques de diagramme, dans lequel est disposé le mécanisme d'entraînement (22) et où sont montés les éléments de centrage et d'entraînement, et avec des moyens permettant de faire coopérer les disques de diagramme, alternativement, aussi bien avec les organes d'enregistrement (7, 8, 9, 10) disposés dans le boîtier qu'avec ceux disposés dans le capot, caractérisé par le fait
que le support (4) est monté à rotation sur un premier axe (6) situé entre les plans des disques de diagramme et disposé diamétralement par rapport aux disques de diagramme et
qu'au premier axe (6) est associé un deuxième axe orienté, pour l'essentiel, perpendiculairement par rapport au premier et autour duquel peut être déplacé le support (4) dans le sens de pivotement du capot (2).

2. Enregistreur de route selon la revendication 1, caractérisé par le fait que l'axe (6) du support (4) est articulé sur l'axe de charnière (19) du capot (2).

3. Enregistreur de route selon l'une quelconque des revendications 1 et 2, caractérisé par le fait que le support (4) est monté axialement élastique sur l'axe (6) et que des moyens d'arrêt (29, 30) sont prévus qui agissent dans le sens de rotation autour de l'axe (6).

4. Enregistreur de route selon l'une quelconque des revendications 1 à 3, caractérisé par le fait que des éléments de serrage (50, 51) associés aux disques de diagramme (I, II) et attachés lâchement dans le boîtier (5) et dans le capot (2) agissent, en tant qu'éléments d'assemblage verrouillants, d'une part entre le support (4) et le copot (2), d'autre part entre le support (4) et le boîtier (5).

5. Enregistreur de route selon l'une quelconque des revendications 1 à 4, caractérisé par le fait qu'au verrou (15) d'une serrure (3) servant au verrouillage du capot (2) et du boîtier (5) et qui est disposé dans le capot (2), est associée une fente (55) dans le support (4).

0 012 223

Fig.2

Fig.1  a...m

9

Fig.4

Fig. 3